# EUROPEAN PATENT APPLICATION

(11) **EP 4 332 940 A1**
(43) Date of publication of application: **06.03.2024**
(21) Application number: 22824583.3
(22) Date of filing: 18.03.2022
(51) Int. Cl.: G08C 19/00, G08C 15/00

(54) **MEASUREMENT DEVICE AND METHOD FOR TRANSMITTING OUTPUT OF SENSOR IN MEASUREMENT DEVICE**

(30) Priority: 14.06.2021 JP 2021098540
(71) Applicant: OMRON Corporation, Kyoto 600-8530 (JP)
(72) Inventor: INOUE, Maya, Kyoto-shi, Kyoto 600-8530 (JP); MIYAKE, Kazunari, Kyoto-shi, Kyoto 600-8530 (JP); KAMADA, Keigo, Kyoto-shi, Kyoto 600-8530 (JP); NAGASHIMA, Atsushi, Kyoto-shi, Kyoto 600-8530 (JP); KOJIMA, Hideaki, Kyoto-shi, Kyoto 600-8530 (JP)
(74) Representative: Isarpatent
(86) International application number: PCT/JP2022/012801
(87) International publication number: WO 2022/264587

(57) **Abstract**

Provided is a measurement device capable of reducing the complexity related to installation of sensors for various measurements or the burden related to the expertise required for installation of sensors for various measurements, and achieving a reduction in sensor settings by a user. A measurement device includes: one or more sensors; a signal processor configured to process an output signal of the sensor; and a connector unit interposed between the sensor and the signal processor and configured to connect the sensor and the signal processor. Pins of the connector unit include a plurality of identification pins for identification of the sensor, and each of the plurality of identification pins is short-circuited using a short-circuit pattern that corresponds to a type of the sensor and/or a type of a communication protocol of the sensor.

## Description

### TECHNICAL FIELD

The present invention relates to a measurement device and a method for transmitting sensor output in the measurement device.

### BACKGROUND ART

Conventionally, there has been proposed an environmental information acquisition device (10), which is convenient and expensive and is used for applications such as agriculture. As the environmental information acquisition device, there is known a device including: an environmental information acquisition unit (11) that communicates with an environmental sensor (20) configured to include one or more sensors to acquire environmental information; a storage unit (12) that stores the environmental information acquired by the environmental information acquisition unit; and a transmission processing unit (11) that transmits the environmental information stored in the storage unit to the outside (e.g., see Patent Document 1).

Also, an environmental measurement device that corrects a difference in measurement time among various types of environmental data has been proposed. As the environmental measurement device, there is known a device including: a plurality of environmental sensors (S1 to Sn) that respectively detect a plurality of types of environmental information; conversion units (C1 to Cn) that are provided for the respective environmental sensor and convert the detection signals of the respective environmental sensors into predetermined environmental data; and a processor (P) that collects the environmental data from each of the conversion units and transmits the collected environmental data to a management device (KS) at a remote location via a communication network (N). The processor collects environmental data with the same time by providing common time information to each of the conversion units simultaneously (e.g., see Patent Document 2).

In recent years, environmental information acquisition devices and environmental measurement devices (hereinafter simply referred to as "measurement devices") that enable environmental measurement using one or more sensors, as described in the above patent documents, have become widespread. The environmental devices as described above are often required to be configured such that the sensor matches a device to which the sensor is connected, such as a signal processor (or sensor adapter). Ideally, the matching of the sensor with the device to which the sensor is connected is easy for the user of the measurement device.

### PRIOR ART DOCUMENTS

### PATENT DOCUMENTS

Patent Document 1: Japanese Unexamined Patent Publication No. 2012-027702
Patent Document 2: Japanese Unexamined Patent Publication No. 2013-256971
Patent Document 3: Japanese Unexamined Patent Publication No. 2012-098901
Patent Document 4: Japanese Unexamined Patent Publication No. 2018-151264

### SUMMARY OF THE INVENTION

### PROBLEMS TO BE SOLVED BY THE INVENTION

The present invention has been made in view of the above problems. Regarding the measurement device as described above, it is the ultimate purpose of the present invention to provide a measurement device that reduces the complexity related to installation of sensors for various measurements or the burden related to the expertise required for installation of sensors for various measurements.

### MEANS FOR SOLVING THE PROBLEMS

The present invention for solving the above problems is a measurement device including:
one or more sensors;
a signal processor configured to process an output signal of the sensor; and
a connector unit interposed between the sensor and the signal processor and configured to connect the sensor and the signal processor.

Pins of the connector unit include a plurality of identification pins for identification of the sensor, and each of the plurality of identification pins is short-circuited using a short-circuit pattern that corresponds to a type of the sensor and/or a type of a communication protocol of the sensor.

According to the present invention, it is possible to easily recognize, in the signal processor, which type is connected to which and to the signal processor, based on the short-circuit patterns of the plurality of identification pins. It is thus possible to reduce the complexity of installation work by an operator installing the sensor in the measurement device or the burden related to the expertise required for installation of sensors for various measurements.

Further, in the present invention, the sensor may be capable of acquiring measurement data, and the measurement device may include a communication unit configured to transmit the output signal processed by the signal processor. Thereby, it is possible to transmit the measurement data acquired by the sensor to a remote computing device and process the measurement data. The remote computing device may be a personal computer (PC) or a server connected via wireless communication or a wired network. In the remote computing device, the measurement data acquired by the sensor may be visualized to facilitate the management of the site of work by the operator.

Further, in the present invention, the signal processor may be configured to be applicable to a communication standard of the sensor connected, and a signal compliant with the communication standard may be assigned to a pin other than the identification pin in the connector unit. This makes it possible to selectively use some pins of the connector unit for identifying the sensor and the communication protocol, and the remaining pins for exchanging signals according to the communication standard of the sensor. Note that the communication standard here corresponds to a hard interface (IF) of each sensor.

Further, in the present invention, the signal processor may be configured to be applicable to a communication standard of the sensor connected, and the identification pin in the connector unit may be also used for exchanging a signal compliant with the communication standard. Thereby, the number of pins required for the measurement device is reduced, and a reduction in size and weight of the measurement device can be achieved.

Further, in the present invention, the communication standard of the sensor may be RS485. This enables the sensor and the signal processor to communicate using general-purpose RS485. As a result, more types of sensors can be connected.

Further, in the present invention, one type of the communication protocol may be MODBUS RTU. Due to good transmission efficiency of MODBUS RTU, it is possible to quickly and accurately transmit the output information of the short-circuit pattern of each of the plurality of identification pins to the information processor.

Further, the present invention may be a method for transmitting sensor output in a measurement device that includes one or more sensors, and a signal processor configured to process an output signal of the sensor, the method including identifying a type of the sensor in the signal processor by short-circuiting one of output lines of the sensor, using a short-circuit pattern that corresponds to the type of the sensor and/or a type of a communication protocol of the sensor.

Note that means for solving the above problems can be used in combination as much as possible.

### EFFECT OF THE INVENTION

According to the present invention, in the measurement device, it is possible to reduce the complexity of installation work by an operator installing the sensor or the burden related to the expertise required for installation of sensors for various measurements. As a result, it becomes easier to install the sensor in the measurement device.

### BRIEF DESCRIPTION OF THE DRAWINGS

Fig. 1 is a schematic view illustrating an example of a measurement device in a first embodiment.
Fig. 2 is an explanatory diagram of a plurality of pins incorporated in an automatic recognition connector of the measurement device in the first embodiment.
Fig. 3 is a functional block diagram illustrating functions of the measurement device in the first embodiment.

### MODE FOR CARRYING OUT THE INVENTION

### [Application Example]

In the present application example, a measurement device equipped with an automatic recognition connector including a pin for identifying an environmental sensor will be described. The measurement device according to the present application example is a device used in agriculture to measure environmental parameters that affect agriculture and calculate an index. However, the measurement device in the present invention is not limited thereto.

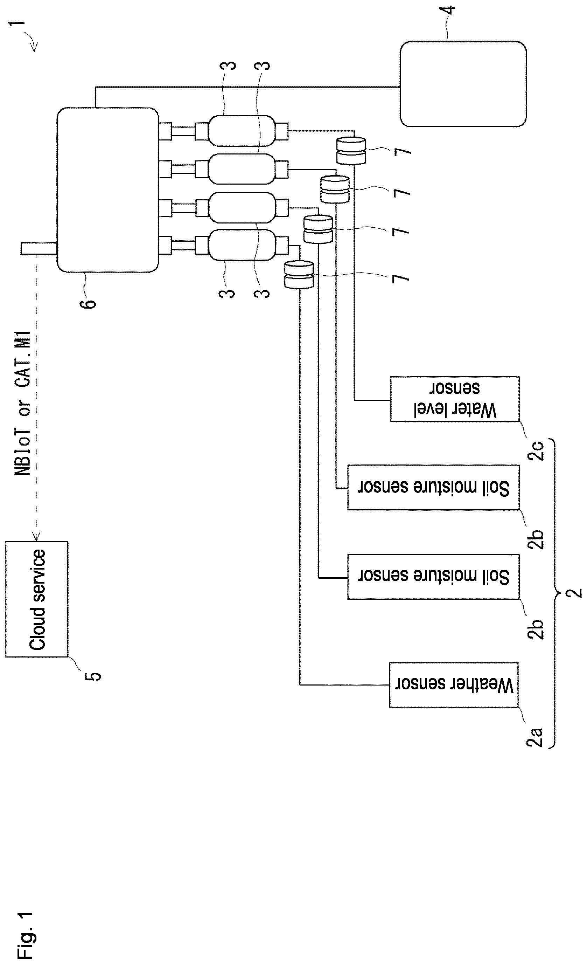

Fig. 1 is a schematic view illustrating an example of a measurement device 1 to which the present invention can be applied. The measurement device 1 in the present application example includes: a plurality of environmental sensors 2; a plurality of sensor adapters 3, each connected to its corresponding one of the plurality of environmental sensors 2; a communication module 6 that is connected to a battery 4 and transmits a signal to a network in which a cloud service 5 is deployed; and an automatic recognition connector 7 interposed between the environmental sensor 2 and the sensor adapter 3 to enable connection therebetween. The environmental sensor 2 in the present application example can acquire various measurement data by using a plurality of sensors. The environmental sensor 2 includes, for example, a weather sensor 2a related to measurement of weather, a soil moisture sensor 2b related to measurement of a moisture content of soil, and a water level sensor 2c related to measurement of a water level.

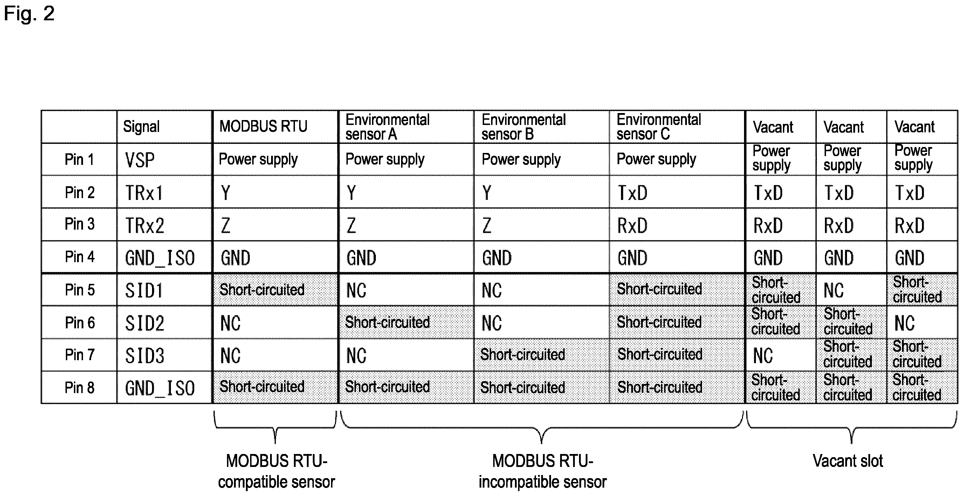

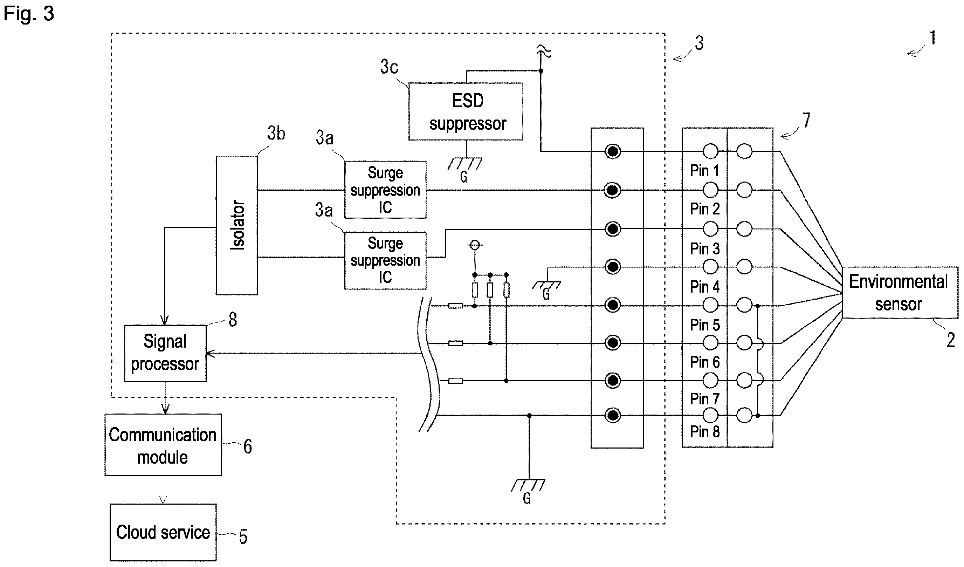

A plurality of pins are incorporated in the automatic recognition connector 7. Some of the plurality of pins are a group of pins for identifying the environmental sensor 2, and are short-circuited using a short-circuit pattern that corresponds to the type of the environmental sensor 2 connected to the sensor adapter 3. The plurality of pins also include a group of pins for transmitting the output signal of the environmental sensor 2 from the automatic recognition connector 7 to the sensor adapter 3. Fig. 2 and Fig. 3 illustrate details of the plurality of pins incorporated in the automatic recognition connector 7.

In Fig. 1, the sensor adapter 3 automatically recognizes the type of the environmental sensor 2 connected to the sensor adapter 3, using a short-circuit pattern of pins for identifying the environmental sensor 2 in the automatic recognition connector 7. The circuit of the sensor adapter 3 includes a signal processor 8 in addition to a surge suppression integrated circuit (IC) 3a and an isolator 3b. The output signal of the environmental sensor 2 is adjusted in a processable manner in the circuit of the sensor adapter 3 and transmitted to the communication module 6. The communication module 6 wirelessly communicates the output signal of the environmental sensor 2, which has been adjusted in a processable manner, to the cloud service 5, using an antenna attached to the communication module 6. Calculation processing is applied to environmental parameters, obtained from the environmental sensor 2, in the cloud service 5. In this way, an index of the environmental parameter is obtained, and the index is visualized in the cloud service 5. Visualizing the index makes it easier to manage the agricultural field.

### [First embodiment]

Hereinafter, a measurement device according to a first embodiment of the present invention will be described in detail with reference to the drawings. In the following embodiment, an example of the present invention being applied for agricultural use as an environmental control device will be described. However, the present invention may be applied to other uses, such as factory automation (FA) in a factory. Note that the measurement device according to the present invention is not intended to be limited to the following configuration.

### <Device configuration>

Here, the description returns to Fig. 1. As described above, the output signal obtained from the environmental sensor 2 is transmitted to the network (cloud), in which the cloud service 5 is deployed, via the automatic recognition connector 7, the sensor adapter 3, and the communication module 6. The cloud service 5 performs processing for visualizing the information on the environmental parameters and provides the information to a user. Regarding the serial communication standard between the environmental sensor 2 and the sensor adapter 3, the sensor adapter 3 is created depending on the hard IF of each environmental sensor 2. In the measurement device 1 according to the first embodiment, the hard IF of the sensor adapter 3 corresponds to RS485. Note that the serial communication standard may be other than RS485.

The length of the output line between each environmental sensor 2 and the automatic recognition connector 7 may be, for example, about 10 m. The length of the output line between the automatic recognition connector 7 and the sensor adapter 3 may be, for example, about 5 cm. The communication standard from the communication module 6 to the cloud is, for example, NBIoT, CAT.M1, or the like. Note that the information may be transmitted from the communication module 6 to the cloud service 5 via wired communication or wireless communication. Here, the environmental sensor 2 corresponds to a sensor in the present invention.

The communication module 6 particularly corresponds to a communication unit in the present invention. The automatic recognition connector 7 corresponds to a connector unit in the present invention. In the embodiment, the signal output from the environmental sensor 2 and adjusted by the sensor adapter 3 is transmitted via wireless communication by the communication module 6 to a PC or a server operating in the cloud service 5. However, the signal may be directly transmitted from the sensor adapter 3 to the PC or the server in a wired manner.

### functional Configuration>

Fig. 2 is an explanatory diagram of the signal assignment of a plurality of pins incorporated in the automatic recognition connector 7 of the measurement device 1 in the first embodiment. The automatic recognition connector 7 in the first embodiment includes eight pins, which will be described below as Pins 1 to 8. Eight pins are connected to the sensor adapter 3 through the output lines, and Pins 2 and 3 are assigned to exchange output information between the environmental sensor 2 and the sensor adapter 3.

More specifically, Pin 2 is a pin that enables transmission of a command signal, after being processed in the sensor adapter 3, from the PC or the server in the cloud service 5 to the environmental sensor 2. Pin 3 receives the output signal of the environmental sensor 2. Note that "TxD" illustrated in Fig. 2 indicates that the pin is a terminal for transmitting data to the environmental sensor 2. In addition, "RxD" represents that the pin is a terminal for receiving data from the environmental sensor 2. Further, "Y" and "Z" illustrated in Fig. 2 indicate that the respective pins are connected to the driver of the inversion output and the non-inversion output in the sensor adapter 3. Pin 1 is a pin connected to a power supply, and Pin 4 is a pin connected to a ground G.

Among the eight pins, Pins 5 to 8 are used as a group of pins for identifying the environmental sensor 2 connected to the sensor adapter 3. Pin 8 is a pin connected to the ground G. The measurement device 1 can be connected to both a MODBUS RTU-compatible environmental sensor which is a type of communication protocol, and a MODBUS RTU-incompatible environmental sensor (Fig. 2 illustrates an environmental sensor A, an environmental sensor B, and an environmental sensor C). The manner in which Pins 5 to 8 automatically recognize the environmental sensor 2 varies depending on whether the target of automatic recognition is the MODBUS RTU-compatible environmental sensor or the MODBUS RTU-incompatible environmental sensor.

In the embodiment, in a case where the target of the automatic recognition is the MODBUS RTU-compatible environmental sensor, Pins 5 to 8 of the automatic recognition connector 7 are short-circuited using a common short-circuit pattern. The common short-circuit pattern indicates that Pins 5 and 8 are short-circuited in Fig. 2. In other words, when Pins 5 and 8 are short-circuited, it is automatically recognized that the sensor is the MODBUS RTU-compatible environmental sensor. In a case where the target of the automatic recognition is the MODBUS RTU-incompatible environmental sensor, a short-circuit pattern has been determined for Pins 5 to 8 according to the type of environmental sensor, and the type of MODBUS RTU-incompatible environmental sensor is recognized using this short-circuit pattern.

For example, in Fig. 2, when Pins 6 and 8 are short-circuited, it is automatically recognized that the connected sensor is the environmental sensor A. Here, a different IP address has been assigned to each of the environmental sensor A, the environmental sensor B, and the environmental sensor C. For example, a communication protocol unique to a manufacturer of each sensor may be used. The functions of Pin 1 to Pin 8 and the short-circuit pattern are not limited to those illustrated in Fig. 2, and the number of pins is not limited to eight. As illustrated in Fig. 2, in the embodiment, seven sensor adapters 3 are provided, and seven types of environmental sensors 2 can be connected. However, the number of sensor adapters 3 and the number of connectable environmental sensors 2 are not limited thereto.

In Fig. 2, Pins 5 to 8 are pins that recognize the type of environmental sensor. However, in addition to being pins that recognize the type of environmental sensor, these pins may be shared with pins that exchange signals, such as Pins 2 and 3. In this case, the timing for identifying the sensor and the timing for exchanging signals may be switched in time. At this time, the pins that are used may be enabled, and the pins that are not used may be disabled by bringing the pins into a high impedance state.

Fig. 3 is a functional block diagram illustrating the functions of the measurement device 1 in the first embodiment. As described above, in the measurement device 1, the environmental sensor 2 is connected to the sensor adapter 3 through the output lines via the eight pins incorporated in the automatic recognition connector 7. In Fig. 3, the output lines connected by Pins 2 and 3 pass through the surge suppression IC 3a and the isolator 3b in the sensor adapter 3. The surge suppression IC 3a suppresses an abnormally high voltage, which is generated instantaneously, and protects a circuit in the measurement device 1 including the sensor adapter 3. The isolator 3b insulates noise generated in the circuit in the sensor adapter 3.

The output line connected by Pin 1 is connected to the power supply (not illustrated), and is connected to the ground G via an electrostatic discharge (ESD) suppressor 3c, thereby protecting the sensor adapter 3 and the connected environmental sensor 2 from static electricity. As also illustrated in Fig. 2, Pins 5 to 8 are short-circuited using a short-circuit pattern that corresponds to the type of the environmental sensor 2. Fig. 3 is an example of the measurement device 1 in which Pins 5 and 8 are short-circuited, and according to the example illustrated in Fig. 2, the environmental sensor 2 is recognized as being compatible with MODBUS RTU.

The output signals output from Pin 2, Pin 3, and Pins 5 to 8 are finally processed by the signal processor 8. Thereafter, as described above, the output signals are transmitted to the PC or the server in the cloud service 5 via wireless communication by the communication module 6, and subjected to signal processing. Even if a surge or noise that is instantaneously generated is included, when little influence is exerted on the function of the signal processor 8, the surge suppression IC 3a or the isolator 3b is not necessarily required. In that case, the sensor adapter 3 corresponds to a signal processor in the present invention. The short-circuit pattern in the automatic recognition connector 7 may be set for each type of sensor or for each type of communication protocol.

To enable a comparison between the constituent elements of the present invention and the configurations of the embodiments, the constituent elements of the present invention will be described below with reference signs in the drawings.

### <Supplementary note 1>

A measurement device (1) including:
one or more sensors (2);
a signal processor (8) configured to process an output signal of the sensor; and
a connector unit (7) interposed between the sensor and the signal processor and configured to connect the sensor and the signal processor,
in which pins of the connector unit include a plurality of identification pins for identification of the sensor, and each of the plurality of identification pins is short-circuited using a short-circuit pattern that corresponds to a type of the sensor and/or a type of a communication protocol of the sensor.

### <Supplementary note 2>

A method for transmitting sensor output in a measurement device (1) that includes
one or more sensors (2), and
a signal processor (8) configured to process an output signal of the sensor,
the method including
identifying a type of the sensor in the signal processor by short-circuiting one of output lines of the sensor, using a short-circuit pattern that corresponds to the type of the sensor and/or a type of a communication protocol of the sensor.

### DESCRIPTION OF SYMBOLS

- 1: measurement device
- 2: environmental sensor
- 2a: weather sensor
- 2b: soil moisture sensor
- 2c: water level sensor
- 3: sensor adapter
- 3a: surge suppression IC
- 3b: isolator
- 3c: ESD suppressor
- 4: battery
- 5: cloud service
- 6: communication module
- 7: automatic recognition connector
- 8: signal processor

## Claims

1. A measurement device comprising:
one or more sensors;
a signal processor configured to process an output signal of the sensor; and
a connector unit interposed between the sensor and the signal processor and configured to connect the sensor and the signal processor,
wherein pins of the connector unit comprise a plurality of identification pins for identification of the sensor, and each of the plurality of identification pins is short-circuited using a short-circuit pattern that corresponds to a type of the sensor and/or a type of a communication protocol of the sensor.

2. The measurement device according to claim 1, wherein
the sensor is capable of acquiring measurement data, and
the measurement device further comprises a communication unit configured to transmit the output signal processed by the signal processor.

3. The measurement device according to claim 1 or 2, wherein
the signal processor is configured to be applicable to a communication standard of the sensor connected, and
a signal compliant with the communication standard is assigned to a pin other than the identification pin in the connector unit.

4. The measurement device according to claim 1 or 2, wherein
the signal processor is configured to be applicable to a communication standard of the sensor connected, and
the identification pin in the connector unit is also used for exchanging a signal compliant with the communication standard.

5. The measurement device according to claim 1 or 2, wherein a communication standard of the sensor is RS485.

6. The measurement device according to any one of claims 1 to 5, wherein one type of the communication protocol is MODBUS RTU.

7. A method for transmitting sensor output in a measurement device that comprises one or more sensors, and
a signal processor configured to process an output signal of the sensor,
the method comprising
identifying a type of the sensor in the signal processor by short-circuiting one of output lines of the sensor, using a short-circuit pattern that corresponds to the type of the sensor and/or a type of a communication protocol of the sensor.
